(19)

Europäisches
Patentamt

European
Patent Office

Office européen
des brevets

(11)　　EP 2 492 440 B1

(12)　　　　**EUROPEAN PATENT SPECIFICATION**

(45) Date of publication and mention
of the grant of the patent:
**31.10.2018　Bulletin 2018/44**

(51) Int Cl.:
*F01D 5/14* *(2006.01)*　　　*F01D 9/04* *(2006.01)*

(21) Application number: **12156171.6**

(22) Date of filing: **20.02.2012**

(54) **Turbine nozzle blade and steam turbine equipment using same**

Turbinenleitschaufel und Dampfturbinenausrüstung damit

Aube statorique de turbine et équipement de turbine à vapeur l'utilisant

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.02.2011　JP 2011035305**

(43) Date of publication of application:
**29.08.2012　Bulletin 2012/35**

(73) Proprietor: **Mitsubishi Hitachi Power Systems,
Ltd.
Yokohama 220-8401 (JP)**

(72) Inventors:
• **Shibata, Takanori
Tokyo, 100-8220 (JP)**
• **Segawa, Kiyoshi
Tokyo, 100-8220 (JP)**
• **Kishibe, Tadaharu
Tokyo, 100-8220 (JP)**
• **Kimura, Seiichi
Tokyo, 100-8220 (JP)**
• **Lee, Goingwon
Tokyo, 100-8220 (JP)**

(74) Representative: **MERH-IP Matias Erny Reichl
Hoffmann
Patentanwälte PartG mbB
Paul-Heyse-Strasse 29
80336 München (DE)**

(56) References cited:
**EP-A2- 0 833 060　　　EP-A2- 1 967 694
WO-A1-2007/042522　　JP-A- S5 669 405
JP-A- S59 115 500**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention relates to a turbine nozzle blade used for axial-flow turbines, especially gas turbines, steam turbines, and the like, at electric power plants.

2. Description of the Related Art

In recent years, it is strongly requested to further enhance turbine performance for the purpose of an improvement in electric-power generating efficiency at power plants. Turbine performance is involved in the stage loss, exhaust loss, and mechanical loss of the turbine, and it is considered to be most effective to reduce the stage loss, in particular, for turbine performance improvement. There are various types of stage loss. Such stage loss can be roughly categorized, namely, (a) profile loss due to the blade shape itself, (b) secondary-flow loss due to a working fluid flow not along a main flow of the working fluid, and (c) leakage loss caused by leakage of the working fluid from the main flow. The secondary-flow loss, more specifically caused by a difference in vertical blade height and/or interference between the blade and an endwall boundary layer, has had a nature that simply optimizing a vertical sectional shape of a certain blade is ineffective for reducing the loss.

In order to solve such a problem, JP-2008-202420-A proposes a technique for reducing circumferential chord length of a central portion of a blade relative to that of a tip and hub near an endwall of the blade, while at the same time gradually reducing the latter circumferential chord length as the chord draws nearer to the central portion of the blade. According to JP-2008-202420-A, forming the blade in that form slopes the blade surface with a convex pressure side at an endwall-neighboring portion close to a leading edge of the blade, thus enabling reduction in magnitude of a secondary flow occurring near the endwall. JP-2008-202420-A also describes that near a throat of the blade, the blade surface is slightly sloped, which enables suppression of a flow-rate bias to one side in a vertical direction of the blade, alleviating an increase in rotor blade loss.

WO 2007/042522 A1 describes a blade of a turbo-machine which has a chord length in the middle region of the blade aerofoil that is less than the chord length in the top and bottom regions of the blade aerofoil.

EP 1 967 694 A2 describes a turbine blade for a turbomachine, wherein a circumferential row of aerofoil members span an annular duct for carrying a flow of compressible fluid. Each aerofoil member has reverse compound lean. Each aerofoil member further has a leading edge which has a position at the endwall which is upstream of its position at midspan.

SUMMARY OF THE INVENTION

JP-2008-202420-A, however, does not describe on a stagger angle of the blades and on a load distribution in an axial chord direction, and a reduction effect against secondary-flow loss has been unlikely to be fully brought about with the conventional technique involved. The load distribution, in particular, has a close relationship to the number of blades, so it is crucial to optimize the load distribution according to the number of blades.

The present invention is intended to provide a turbine nozzle blade minimized in contact area between a blade and a flow of fluid by reducing the number of blades to a minimum requirement for a desired direction change of a fluid flow in order to reduce blade profile loss. And at the same time, the turbine nozzle blade is further improved in stage efficiency of the turbine by optimizing a load distribution and axial chord length near an endwall in order to reduce secondary-flow loss due to interference between the blade and a boundary layer on the endwall. The reduction in the number of blades also contributes to reduction in manufacturing costs of the turbine and to supply of a turbine high in efficiency and low in manufacturing costs.

The above-described object is achieved by the invention according to the independent claim. The dependent claims describe further preferred developments.

According to one aspect, in a turbine nozzle blade of the present invention, when a differential pressure between a pressure side and a suction side of a blade, at one same axial chord position of the blade, is defined as a load of the blade, and a ratio between axial chord length of the blade and an axial distance from a leading edge thereof at one same vertical position of the blade where the blade load becomes a maximum is defined as a maximum load relative position, the axial chord length of the blade is greater at a hub and tip thereof than at an intermediate vertical portion thereof, and simultaneously a maximum load relative position at the hub and tip of the blade is set to be nearer to a trailing edge thereof than a maximum load relative position of the intermediate vertical portion of the blade.

The above configuration enables supply of a turbine nozzle blade in which reducing the number of blades is effective for reducing secondary-flow loss in addition to profile loss, and hence for improving turbine stage efficiency.

The reduction in the number of blades further contributes to reduction in manufacturing costs of the turbine and to supply of a turbine high in efficiency and low in manufacturing costs.

BRIEF DESCRIPTION OF THE DRAWINGS

Fig. 1 is a cross-sectional view showing a structure of essential elements of a steam turbine stage section according to a first embodiment of the present invention;

Fig. 2 is a perspective view of the turbine nozzle blade structure of the first embodiment;

Fig. 3 is a cross-sectional view showing a structure of essential elements of a conventional steam turbine stage section;

Fig. 4 is an explanatory diagram that schematically represents vortex flows occurring between the blades of the cascade structure shown in Fig. 3;

Figs. 5A, 5B, and 5C are graphs that represent vertical axial chord length, maximum load relative position, and loss distribution of a blade in the turbine nozzle blade according to the first embodiment;

Fig. 6 is a graph that represents a relationship between a pressure distribution on the blade surface and a load distribution;

Fig. 7 is an explanatory diagram that represents a meridional shape and cross-sectional shape of the turbine nozzle blade according to the first embodiment;

Fig. 8 is an explanatory diagram that represents a meridional shape of a turbine nozzle blade according to a second embodiment of the present invention;

Fig. 9 is an explanatory diagram that represents a meridional shape of a turbine nozzle blade according to a third embodiment of the present invention; and

Fig. 10 is a schematic system diagram of steam turbine equipment according to the first embodiment.

DESCRIPTION OF THE PREFERRED EMBODIMENTS

Hereunder, embodiments of the present invention will be described in detail referring to the accompanying drawings as appropriate. The same reference number is assigned to each of equivalent constituent elements throughout the drawings.

Each embodiment described below is an example in which the present invention is applied to nozzle blades of a steam turbine. While the invention is applied to a steam turbine for the sake of convenience in the description, principles of operation are substantially the same, even for gas turbines using a working fluid different from that of the turbine according to the invention, and the invention can be applied to practically all types of axial-flow turbines.

(First Embodiment)

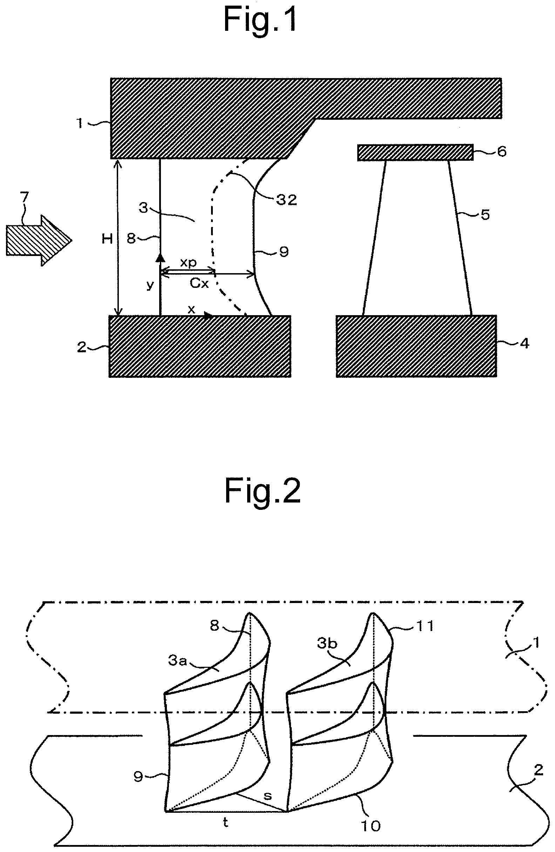

A first embodiment of the present invention is described below. Fig. 1 is a cross-sectional view showing a structure of a steam turbine stage section according to the present embodiment. As shown in Fig. 1, the steam turbine stage section according to the present embodiment includes a plurality of nozzle blades 3 each disposed in a circumferential direction of the turbine, between a diaphragm outer ring 1 and a diaphragm inner ring 2. The steam turbine stage section also includes a plurality of rotor blades 5 each disposed in a circumferential direction of a turbine rotor 4, at a downstream side of a flow direction of steam relative to one of the nozzle blades 3. The downstream side of the flow direction of steam relative to the nozzle blade 3 is hereinafter referred to simply as the downstream side. The radially outer side of the turbine is hereinafter referred to simply as the outer side. A shroud 6 is provided at a tip of each rotor blade 5, at a radially outer side of the turbine, and a sealing structure not shown is provided between the shroud 6 and a stationary body opposed thereto.

A main steam flow 7 that is the working fluid is supplied from the upstream side of a nozzle leading edge 8, passing across the blade, and then flows out into the downstream side of a nozzle trailing edge 9. The main steam flow 7 that has flown out from the nozzle blade 3 impinges upon the rotor blade 5 located at a downstream position relative to the nozzle blade 3. The steam turbine thus rotates the turbine rotor 4, converts rotational energy into electrical energy by means of a power generator (not shown) connected to an end portion of the turbine rotor 4, and generates electricity.

For ease in understanding a three-dimensional shape of the nozzle blade according to the present invention, Fig. 2 shows the nozzle blade in perspective view. In Fig. 2, part of the cascade structure including the plurality of nozzle blades in the circumferential direction of the turbine is represented in horizontally developed form for the sake of descriptive convenience. The nozzle blades 3 are arranged in the circumferential direction between the diaphragm outer ring 1 and the diaphragm inner ring 2. Each nozzle blade 3 is fixed at its hub side 10 to the diaphragm inner ring 2, and at its tip side 11 to the diaphragm outer ring 1. The nozzle blades 3 are equally spaced at horizontals interval (pitch) "t" between adjacent blades in the circumferential direction of the turbine, the pitch "t" being determined from the number of blades in the cascade. The shortest distance "s" from a nozzle blade 3a to the trailing edge of an adjacent nozzle blade 3b, in a vertical section of each blade, is hereinafter referred to as throat length. The present embodiment is characterized in that as in Fig. 1, since the nozzle blades are arranged in sectionally stacked form in a radial direction so that the leading edges of each blade are linear, the blade has a suction surface of a concave shape and a pressure surface of a convex shape, near the trailing edge.

A configuration and operation of the present embodiment are described in detail below. Fig. 1 shows a shape of one nozzle blade 3 as projected on a meridional plane. For the sake of descriptive convenience, an axial direction is expressed as "x," a span direction (synonymous with a vertical direction) of the blade, as "y," and height from the hub of the blade to the tip, as blade height H, with a leading edge 8 of the blade hub taken as an origin. In addition, an axial distance from the leading edge of a blade section to the trailing edge thereof, at certain blade height "y," is termed axial chord length and expressed as reference code "Cx," whereas an axial distance from the leading edge to a maximum load position (described later herein) is expressed as reference code "xp." The load here refers to the blade load that is a differential pressure between the pressure side and suction side of the blade, at the same axial chord position. As can be seen from Fig. 1, the nozzle blades of the present invention are characterized in that the axial chord length "Cx" has a definite radial region near an intermediate vertical position of the blade and in that the "Cx" value is smaller than those of the hub, tip, and other portions neighboring an endwall of the blade. The maximum load position "xp" near the intermediate vertical position is relatively close to the leading edge, compared with the maximum load position near the endwall.

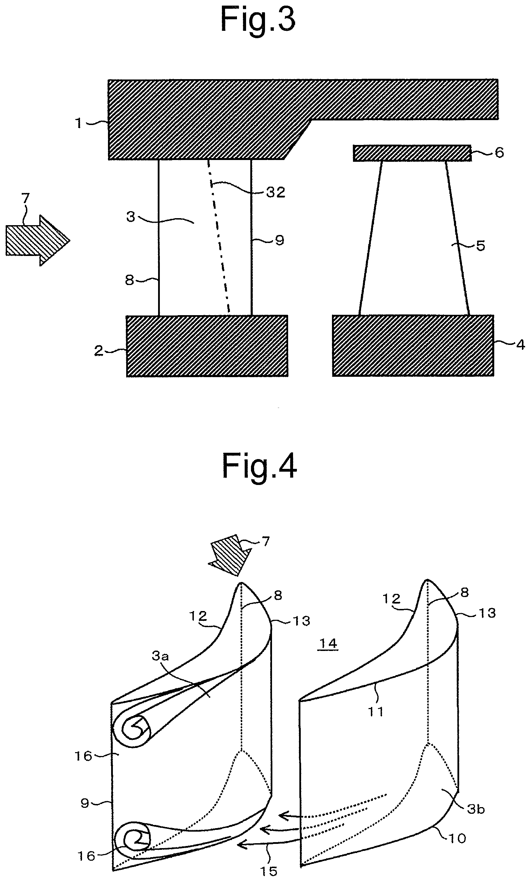

A meridional shape of a general turbine stage is shown in Fig. 3 for comparison with that of the present invention. As can be seen from Fig. 3, the axial chord lengths of conventional nozzle blades have been constant over a substantially entire region from the blade hub to the blade tip. Additionally, in each conventional nozzle blade, the maximum load position, as it approaches the hub, is nearer to the trailing edge, and as it approaches the tip, is nearer to the leading edge. The maximum load position has association with a load coefficient (described later herein) of the blade. That is to say, the maximum load position means that at the hub side of a small blade pitch "t," the maximum load position is set to be closer to the trailing edge, because of a small load coefficient, while at the tip side of a large blade tip "t," the maximum load position is set to be more shifted in an upstream direction, because of a large load coefficient.

Fig. 4 is a schematic diagram of a secondary flow occurring in the turbine nozzle blade shown in Fig. 3. For the sake of simplification, a diaphragm outer ring 1 and inner ring 2 are omitted in the diagram. As shown in Fig. 4, each nozzle blade 3 includes a pressure surface 12 formed at a pressure side of the blade, and a suction surface 13 formed at a suction side of the blade. A main steam flow 7 is supplied from the upstream side of a nozzle leading edge 8, passing through a blade passage 14 formed between the pressure surface 12 and the suction surface 13, and then flows into the downstream side of a nozzle trailing edge 9. While the main steam flow 7 passes through the blade passage 14, a pressure gradient occurs between the blades. This generates a secondary flow 15 heading from the pressure surface 12 towards the suction surface 13. In addition, the main steam flow 7 streams from the leading edge 8 into the blade passage 14, generating vortices on the pressure surface 12 and the suction surface 13. Among all generated vortices, only those existing on the pressure surface 12 each form a passage vortex 16 while developing within the blade passage. After that, the vortices on the pressure surface 12 are influenced by the secondary flow 15 and move to the suction surface 13. The passage vortex 16 occurs at both the blade hub 10 and the blade tip 11. In a cascade structure with nozzle blades of a small aspect ratio, especially nozzle blades of an aspect ratio as low as 1.0 or less, the passage vortices 16 that have occurred at the blade hub 10 and the blade tip 11 interfere with each other, forming a flow significant in loss. The passage vortices 16 lowers work efficiency of the turbine nozzle blades, becoming a major cause of endwall loss.

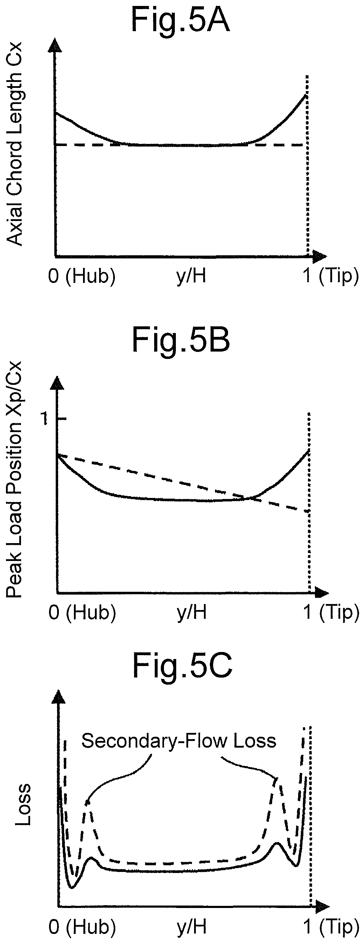

Differences in "Cx" and "xp" between the present invention and the conventional example are described below referring to Figs. 5A, 5B, and 5C. Plottings of the axial chord length "Cx," maximum load relative position "xp/Cx," and fluid loss, in that order from above, against dimensionless blade height "y/H" on the horizontal axis, are shown in Figs. 5A, 5B, and 5C, respectively. The dimensionless blade height "y/H" here is a value derived by making it dimensionless with the blade height H so that the position relative to the blade height H, the dimension from the hub to tip of a blade of given blade height, becomes readily identifiable. The maximum load relative position is a ratio between the axial chord length of the blade and the axial distance from the leading edge at the same vertical position of the blade where the blade load becomes a maximum. The maximum load relative position is a value derived by making it dimensionless with the axial chord length "Cx" at a particular vertical position so that the position relative to the axial chord length becomes readily identifiable. Solid lines in Figs. 5A-5C represent each distribution state in the present embodiment, and dashed lines represent each distribution state in the conventional example.

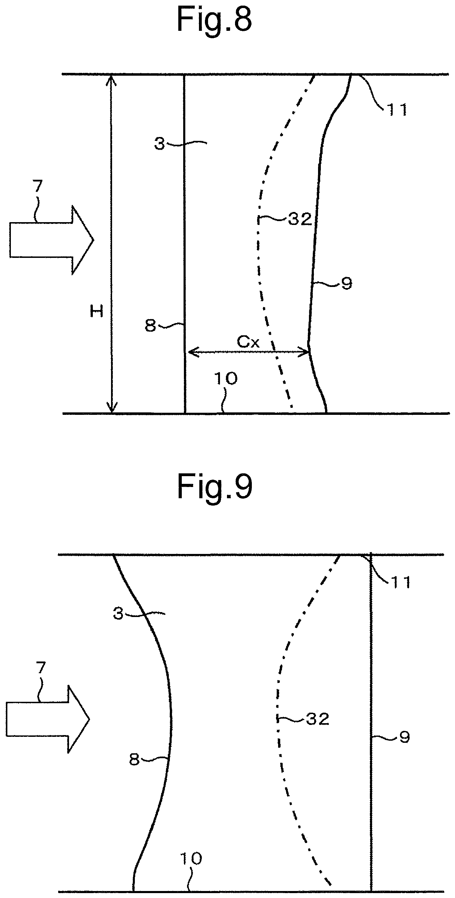

As can be seen from Fig. 5A, the axial chord lengths of conventional nozzle blades have commonly exhibited a distribution that is constant, or otherwise monotonically increases, in the region from the blade hub to the blade tip, whereas the axial chord length in the present embodiment is greater than the axial chord length at the intermediate vertical position of the blade, in the neighborhood of the blade hub or tip. As the axial chord heads from the blade hub towards the blade tip, the axial chord length of the blade hub decreases at a rate equivalent to or higher than a change rate of the axial chord length in the vicinity of the intermediate vertical position of the blade, and the axial chord length of the blade tip increases at a rate equivalent to or higher than the change rate of the axial chord length in the vicinity of the intermediate vertical position of the blade. While the example in which the axial chord lengths of the hub and tip are greater than the axial chord length of the intermediate vertical position has been described and shown as a typical example in the present embodiment, only the axial chord length of either the hub or the tip may be greater than the axial chord length of the intermediate vertical position. In addition, in order to render the leading edges of the nozzle blades linear in Fig. 1, the nozzle blades are arranged in sectionally stacked form with the trailing edges extended, however the nozzle blades do not always need to be stacked in this fashion. For example, the nozzle blades may be stacked so that the trailing edges are linear, as in Fig. 9. Furthermore, while Fig. 1 shows a region in which the axial chord length "Cx" at the intermediate vertical position of the blade is constant in the radial direction, the region of constant "Cx" may be unnecessary if the blade is too short. What is important in the present invention is whether the blade hub, intermediate height, and the axial chord length at the tip are maintained in the relationship described above.

If such a constant "Cx" distribution as seen in the conventional example is adopted as a distribution of axial chord length, "t/Cx" that is the ratio between the interblade pitch "t" and the axial chord length "Cx" will be greater at positions closer to the tip of the blade. This characteristic is involved in the fact that if the number of blades is considered to be fixed, blade sections nearer to an outside-diametral side will be larger in pitch "t." The "t/Cx" value is involved in an aerodynamic blade load, and as "t/Cx" increases, the blade load for obtaining a turn of a certain flow will be higher.

The following Zweifel load coefficient is generally used as an index to denote the aerodynamic load exerted upon the blade:

$$\Psi = 2(t/Cx)\cos^2\beta\,|\tan\alpha - \tan\beta| \quad \ldots \text{ (Expression 1)}$$

where "t" is the pitch, "Cx" the axial chord length, "$\alpha$" an inflow angle as measured from the axial direction, and "$\beta$" an outflow angle as measured from the axial direction. The above Expression indicates that the load becomes higher with increasing turn of flow at the blade inlet or exit or with increasing cascade pitch relative to the axial chord length. In general, cascades of high load coefficients tend to increase in profile loss and are known to depend greatly upon the load distribution of the blade, as well as upon the load coefficient.

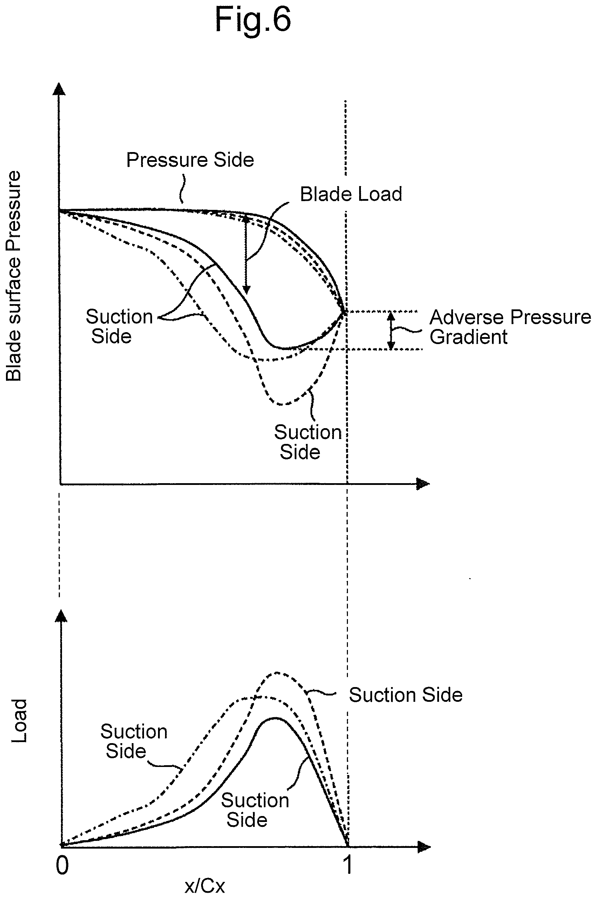

The relationship between profile loss and the load distribution is described below referring to Fig. 6. The load distribution here refers to a distribution of the blade load from the leading edge of the blade to the trailing edge thereof, the blade load being defined as a difference in blade surface static pressure between upper and lower surfaces of the blade. As with non-design points having an incidence angle, a region in which the pressures at the leading edge and trailing edge of the blade suffer abrupt changes is excluded from the load distribution in Fig. 6. Profile loss is composed of factors such as skin friction loss, deceleration loss, and trailing edge loss. Skin friction loss increases with increasing fluid velocity level of the blade, while deceleration loss increases with increasing rate of reduction in the velocity along the blade surface. The fluid velocity distribution of the blade has a strong correlation to the pressure distribution, with a decrease in blade surface pressure reducing a density of the fluid and increasing a velocity of the fluid. Accordingly, the blade surface also suffers more deceleration loss with an increase in adverse pressure gradient.

An ideal distribution of blade surface pressure that allows for the above is described below. First, conditions under which the load coefficient is fixed are assumed. For reduced skin friction loss, aft loading with suppressed fore loading of the blade is desirable in order to suppress an increase in velocity. If a load peak is brought too close to the trailing edge side, however, the adverse pressure gradient will commonly be steep near a trailing edge portion of the suction side, resulting in augmented deceleration loss. Therefore, loading that generates a load distribution peak near the trailing edge without causing too significant deceleration loss creates an ideal load distribution.

A load distribution by reducing the number of blades for reduced trailing-edge loss is considered below. Reducing the number of blades while a load peak position remains fixed will change the blade suction-side pressure distribution from a state of a solid line in Fig. 6 to that of a dashed line. At this time, the adverse pressure gradient from a minimum pressure at the suction side to the trailing edge will be steep and deceleration loss will increase. Besides, since the suction-side pressure distribution whose influence upon performance is dominant will descend as a whole, velocity will increase and skin friction loss will also increase. Reducing the number of blades with the same load distribution maintained, therefore, will actually increase overall element performance of the blade even more significantly. In the present embodiment, as with the load distribution represented by the dashed line, the suction-side minimum pressure position at which the static pressure on the suction surface of the blade becomes a minimum is shifted more to the trailing-edge side, at the blade hub and the blade tip, than to the intermediate position of the blade, and the load peak position is shifted in an upstream direction. These measures relax the suction-side adverse pressure gradient in the neighborhood of the trailing edge, thus suppressing deceleration loss. Accordingly, the amount of reduction in trailing edge loss due to the reduction in the number of blades surpasses the increment in deceleration loss due to the increase in blade load, resulting in the blade as a whole improving in element performance. In the present embodiment, optimizing the load distribution in a 0.7-1.1 data range of the load coefficient $\Psi$ is effective for achieving both of the improvement of blade performance and the reduction in the number of blades at the same time.

The relaxation of the adverse pressure gradient can be achieved by extension of the axial chord length "Cx" as well as by correction/modification of the load distribution. Extending "Cx" with the same load distribution retained will extend a substantial distance and will create a correspondingly smaller pressure gradient "dp/dx," whereby the reduction in deceleration loss will be realized.

The relationship between the blade load distribution and the secondary flow developing in the neighborhood of the endwall is described below. As can be seen from Fig. 4, a slow fluid inside the endwall boundary layer flows from the pressure side of the blade, towards the suction side thereof, because of the differential pressure between both sides. This secondary flow tends to be stronger as the differential pressure between the suction side and the pressure side (i.e., the blade load) increases, and to be much stronger as the differential pressure occurs at positions shifted in the upstream direction. This means that the blades of the aft-loading type that are smaller in upstream differential pressure (blade load) will suffer less curling/swirling of the endwall boundary layer, decreasing in secondary-flow loss. For the reduction in secondary-flow loss, an aft-loading distribution is advantageous in performance.

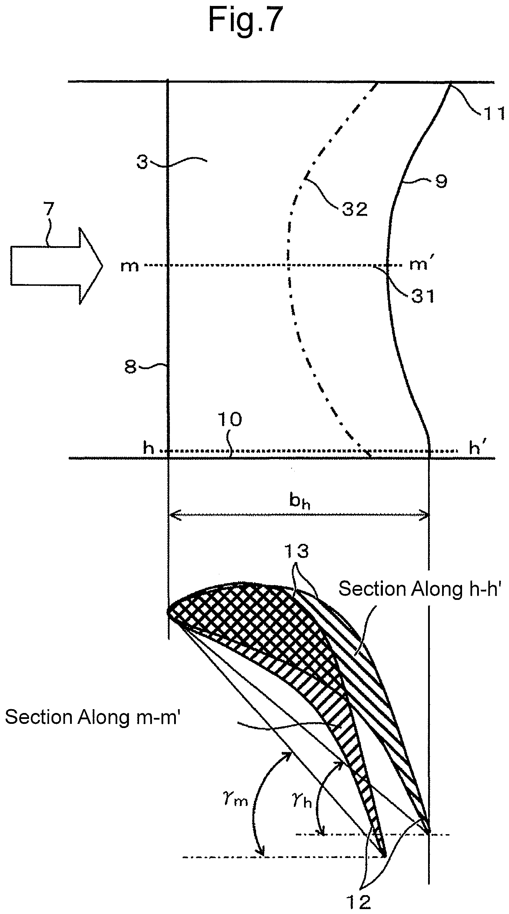

The relationship between the blade shape and the load distribution is described below referring to Fig. 7. Fig. 7 shows the meridional shape of the nozzle blade according to the present invention, and the cross-sectional shape of the blade hub and intermediate vertical portions. As set forth above, the axial chord length of each nozzle blade according to the present invention is greater at the hub and tip than at the intermediate vertical portion. On the other hand, at the hub and the tip, the maximum load relative position "xp/Cx" of the blade load is shifted more to the trailing edge, and at the intermediate vertical portion, rather exists in the upstream direction (in the present invention, near the intermediate chord). The peak position of the load has a close relationship to a camber line that is a center line of blade thickness, so that as the peak position shifts more to the upstream side, the camber line turns more in the upstream direction and so that in consideration of the fact that inlet angle and exit angle of the blade are determined from specifications, a large profile stagger angle is needed to obtain predetermined axial chord length. Simultaneously with this, circumferential chord length that is a circumferential component of chord length increases as the maximum load relative position shifts more to the upstream side. It follows from this that since the nozzle blade of the present invention approaches aft-loading at the hub side, the stagger angle yh of the blade becomes smaller than a stagger angle $\gamma$m of the intermediate vertical portion and at the same time, the circumferential chord length also decreases. These also apply to the tip portion omitted from Fig. 7; the tip portion also becomes smaller than the intermediate vertical portion in stagger angle, and the circumferential chord length decreases.

Advantageous effects of the present invention are described below referring to Fig. 5C. For reduced profile loss near the intermediate vertical portion, the nozzle blade of the present invention uses a minimum necessary number of blades so that the maximum load relative position near the intermediate vertical portion is shifted more to the upstream side than at the hub and the tip. This suppresses an increase in deceleration loss near the intermediate vertical portion due to the reduction in the number of blades, and reduces trailing edge loss through the reduction in the number of blades. Any rates of loss near the intermediate vertical portion are therefore reduced relative to those of the conventional example. Additionally, the axial chord length is extended relative to that of the conventional example, and this extension avoids an increase in load coefficient due to the reduction in the number of blades. Furthermore, the load peak position at the hub and tip is shifted more to the trailing edge than at the intermediate vertical portion, such that secondary-flow loss is also reduced. Accordingly, secondary-flow loss in the vicinity of the hub and the tip is reduced. The two advantageous effects, namely the reduction in profile loss of the main flow and the reduction in secondary-flow loss near the endwall, significantly improve the overall performance of the blade.

Simultaneously with the improvement of performance, the number of blades is also reduced in the present invention. Manufacture of the blades form a main part of steam turbine materials, machining, and assembly costs. Adoption of the present invention also enables significant reduction in steam turbine manufacturing costs.

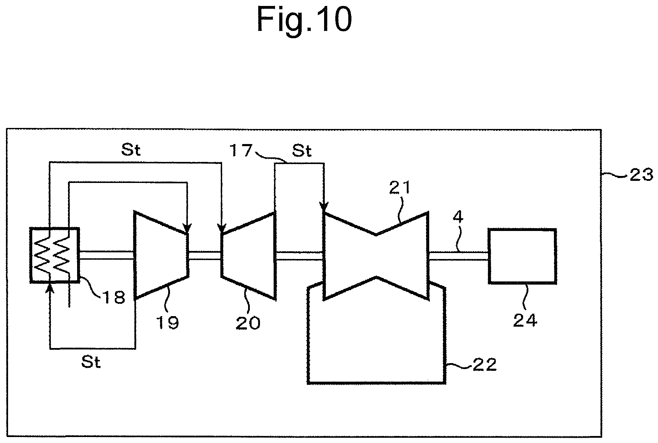

Next, steam turbine equipment applying the turbine nozzle blade of the present embodiment is described below. Fig. 10 shows an example of a schematic system diagram of the steam turbine equipment according to the present embodiment. The steam turbine equipment 23 includes a boiler 18 that is a steam generator for firing a fuel, heating feedwater, and generating steam, a steam turbine that includes a high-pressure turbine 19, intermediate-pressure turbine 20, and low-pressure turbine 21 driven by the boiler-generated steam, and a condenser 22 that condenses the steam released from the low-pressure turbine 21. New feedwater that has resulted from the condensation by the condenser 22 flows down a feedwater line not shown, and is supplied to the boiler 18. The high-pressure turbine 19, the intermediate-pressure turbine 20, and the low-pressure turbine 21 are interconnected via a turbine rotor 4, with a power generator 24 being connected at one end of the turbine rotor 4.

(Second Embodiment)

A second embodiment of the present invention is shown in Fig. 8. Differences from the foregoing embodiment are mainly described below.

The second embodiment relates to a blade of large H/Cx, a ratio between blade height H and axial chord length "Cx." This cascade is equivalent to long blades having a significant difference in radius between the blade tip and hub. In this case, in order to minimize the difference in "t/Cx" (i.e., the difference in load coefficient) between the tip and hub of the blade, "Cx" has been traditionally increased according to a particular radius R. When the present invention is applied to such a case, the hub includes a portion at which, as the radius increases, "d Cx/d R" decreases relative to the distribution of "Cx" that originally has a tendency to increase, and the tip includes a portion at which, as the radius increases, "d Cx/d R" also increases more than at a mid-span position. In other words, the present embodiment is characterized in that "d Cx/d R" is larger at the tip than at the mid-span position, and in that "d Cx/d R" is smaller at the hub than at the mid-span position. Unlike the foregoing embodiment, the present embodiment does not always make it necessary for the axial chord length itself of the hub or tip to be greater than that of the mid-span position.

The adoption of the present invention reduces any secondary-flow loss near the endwall without causing an increase in loss at the mid-span position, even in a cascade of relatively long blades, thus enabling more efficient, less expensive axial-flow turbines.

## Claims

1. A nozzle blade for an axial-flow turbine,
   wherein, when a differential pressure between a pressure side and a suction side of each of blades (3), at one same axial chord position of the blade (3), is defined as a load of the blade (3), and a ratio between axial chord length (Cx) of the blade (3) and an axial distance from a leading edge (8) thereof at one same vertical position of the blade (3) where the blade load becomes a maximum is defined as a maximum load relative position,
   the axial chord length (Cx) of the blade (3) is greater at a hub (10) and tip (11) thereof than at an intermediate vertical portion thereof, and a maximum load relative position at the hub (10) and tip (11) of the blade (3) is set to be nearer to a trailing edge (9) thereof than a maximum load relative position of the intermediate vertical portion of the blade (3),
   **characterized in that**
   a circumferential chord length is smaller at the hub (10) and tip (11) of the blade than at the intermediate vertical portion of the blade (3), and a stagger angle of the blade (3) is smaller at the hub (10) and tip (11) of the blade (3) than at the intermediate vertical portion thereof.

2. The nozzle blade according to claim 1, wherein:

   when a point, except at a leading edge (8) and trailing edge (9) of each of blades (3), at which a static pressure on a suction surface of the blade (3) becomes a minimum, is defined as a suction-side minimum pressure position, a suction-side minimum pressure position at the hub (10) and tip (11) of the blade (3) is set to be nearer to a trailing-edge side than a suction-side minimum pressure position of the intermediate vertical portion of the blade (3) .

3. The nozzle blade according to claim 1, wherein:
   each of blades (3) is formed into a concave shape on a suction surface of a trailing edge (9) of the blade (3), the blade (3) being further formed into a convex shape on a pressure surface of the blade trailing edge (9).

4. The nozzle blade according to claim 1, wherein:

   when a point, except at a leading edge (8) and trailing edge (9) of each of blades (3), at which a static pressure on a suction surface of the blade (3) becomes a minimum, is defined as a suction-side minimum pressure position, a suction-side minimum pressure position at the hub (10) and tip (11) of the blade (3) is set to be nearer to a trailing-edge side than a suction-side minimum pressure position of the intermediate vertical portion of the blade (3) .

5. The nozzle blade according to at least one of claims 1 and 4, wherein:
   each of blades (3) is formed into a concave shape on a suction surface of a trailing edge (9) of the blade (3), the blade (3) being further formed into a convex shape on a pressure surface of the blade trailing edge (9).

**6.** The turbine nozzle blade according to any one of claims 1 to 5, wherein:

when an interblade pitch is expressed as "t," the axial chord length as "Cx," an inflow angle when measured from an axial direction, as "$\alpha$," and an outflow angle when measured from the axial direction, as "$\beta$," and a value $\Psi$ given by

$$\Psi=2(t/Cx)\cos^2\beta|\tan\alpha-\tan\beta| \quad \ldots \text{(Expression 1)}$$

is defined as a load coefficient,
the load coefficient at the intermediate vertical position of the blade (3) takes any value ranging between 0.7 and 1.1 in Expression 1.

**7.** The turbine nozzle blade according to claim 6, wherein:
as the axial chord length (Cx) heads from the blade hub (10) towards the blade tip (11), the axial chord length (Cx) of the blade hub (10) decreases at a rate equivalent to or higher than a change rate of the axial chord length (Cx) in the vicinity of the intermediate vertical position of the blade (3), and the axial chord length (Cx) of the blade tip increases at a rate equivalent to or higher than the change rate of the axial chord length (Cx) in the vicinity of the intermediate vertical position of the blade (3).

**8.** Steam turbine equipment comprising:

a steam generator for heating water and generating steam;
a steam turbine driven by the steam generated by the steam generator; and
a condenser (22) for condensing the steam that has driven the steam turbine;
wherein the steam turbine includes the turbine nozzle blade (3) according to any one of claims 1 to 7.

**Patentansprüche**

**1.** Leitschaufel für eine Axialturbine, wobei
dann, wenn jeweils eine Druckdifferenz zwischen einer Druckseite und einer Sogseite von Schaufeln (3) bei einer gleichen axialen Tiefenposition der Schaufel (3) als eine Last der Schaufel (3) definiert wird und ein Verhältnis zwischen der axialen Flügeltiefe (Cx) der Schaufel (3) und einem axialen Abstand von ihrer Anströmkante (8) bei einer gleichen vertikalen Position der Schaufel (3), an der die Schaufellast maximal wird, als eine Maximallastrelativposition definiert ist,
die axiale Flügeltiefe (Cx) der Schaufel (3) bei ihrer Nabe (10) und ihrer Spitze (11) größer ist als bei ihrem vertikalen Zwischenabschnitt, und eine Maximallastrelativposition bei der Nabe (10) und der Spitze (11) der Schaufel (3) näher an ihrer Abströmkante (9) als eine Maximallastrelativposition des vertikalen Zwischenabschnitts der Schaufel (3) eingestellt ist,
**dadurch gekennzeichnet, dass**
eine umlaufende Flügeltiefe bei der Nabe (10) und der Spitze (11) der Schaufel kleiner ist als bei dem vertikalen Zwischenabschnitt der Schaufel (3) und ein Staffelungswinkel der Schaufel (3) bei der Nabe (10) und der Spitze (11) der Schaufel (3) kleiner ist als bei ihrem vertikalen Zwischenabschnitt.

**2.** Leitschaufel nach Anspruch 1, wobei
dann, wenn jeweils ein Punkt von Schaufeln (3), außer bei einer Anströmkante (8) und einer Abströmkante (9), an dem ein statischer Druck auf eine Sogoberfläche der Schaufel (3) minimal wird, als eine sogseitige Minimaldruckposition definiert ist,
eine sogseitige Minimaldruckposition bei der Nabe (10) und der Spitze (11) der Schaufel (3) näher bei einer Abströmkantenseite als eine sogseitige Minimaldruckposition des vertikalen Zwischenabschnitts der Schaufel (3) eingestellt ist.

**3.** Leitschaufel nach Anspruch 1, wobei
jede der Schaufeln (3) auf einer Sogoberfläche einer Abströmkante (9) der Schaufel (3) in einer konkaven Form ausgebildet ist und die Schaufel (3) ferner auf einer Druckoberfläche der Abströmkante (9) der Schaufel (3) in einer konvexen Form ausgebildet ist.

**4.** Leitschaufel nach Anspruch 1, wobei
dann, wenn jeweils ein Punkt von Schaufeln (3) außer bei einer Anströmkante (8) und einer Abströmkante (9), an dem ein statischer Druck auf eine Sogoberfläche der Schaufel (3) minimal wird, als eine sogseitige Minimaldruckposition definiert ist,
eine sogseitige Minimaldruckposition bei der Nabe (10) und der Spitze (11) der Schaufel (3) näher bei einer Abströmkantenseite als eine sogseitige Minimaldruckposition des vertikalen Zwischenabschnitts der Schaufel (3) eingestellt ist.

**5.** Leitschaufel nach mindestens einem der Ansprüche 1 und 4, wobei
jede der Schaufeln (3) auf einer Sogoberfläche einer Abströmkante (9) der Schaufel (3) in einer konkaven Form ausgebildet ist und die Schaufel (3) ferner auf einer Druckoberfläche der Abströmkante (9) der Schaufel (3) in einer konvexen Form ausgebildet ist.

**6.** Turbinenleitschaufel nach einem der Ansprüche 1 bis 5, wobei
dann, wenn ein Zwischenschaufelanstellwinkel als "t", die axiale Flügeltiefe als "Cx", ein Einströmwinkel, wenn er aus einer axialen Richtung gemessen wird, als "$\alpha$" und ein Abflusswinkel, wenn er aus der axialen Richtung gemessen wird, als "$\beta$" ausgedrückt wird und ein Wert $\Psi$, der durch

$$\Psi = 2\,(t/Cx)\,\cos^2\beta\ |\tan\alpha - \tan\beta| \qquad ... \qquad (\text{Ausdruck } 1)$$

gegeben ist, als ein Lastkoeffizient definiert ist,
der Lastkoeffizient bei der vertikalen Zwischenposition der Schaufel (3) einen beliebigen Wert im Bereich von 0,7 bis 1,1 in Ausdruck 1 annimmt.

**7.** Turbinenleitschaufel nach Anspruch 6, wobei,
dann, wenn die axiale Flügeltiefe (Cx) von der Schaufelnabe (10) zu der Schaufelspitze (11) läuft, die axiale Flügeltiefe (Cx) der Schaufelnabe (10) mit einer Rate abnimmt, die gleich oder höher als eine Änderungsrate der axialen Flügeltiefe (Cx) in der Nähe der vertikalen Zwischenposition der Schaufel (3) ist, und die axiale Flügeltiefe (Cx) der Schaufelspitze mit einer Rate zunimmt, die gleich oder höher als die Änderungsrate der axialen Flügeltiefe (Cx) in der Nähe der vertikalen Zwischenposition der Schaufel (3) ist.

**8.** Dampfturbinenanlage, die Folgendes umfasst:

einen Dampfgenerator zum Erwärmen von Wasser und Erzeugen von Dampf;
eine Dampfturbine, die durch den Dampf, der durch den Dampfgenerator erzeugt wird, angetrieben wird; und
einen Kondensator (22) zum Kondensieren des Dampfes, der die Dampfturbine angetrieben hat;
wobei die Dampfturbine die Leitschaufel (3) nach einem der Ansprüche 1 bis 7 enthält.

**Revendications**

**1.** Aube statorique pour une turbine à flux axial,
dans laquelle, quand une pression différentielle entre un côté pression et un côté succion de chacune des aubes (3), à une même position sur la corde axiale de l'aube (3), est définie comme étant une charge de l'aube (3), et un rapport entre la longueur de la corde axiale (Cx) de l'aube (3) et une distance axiale depuis un bord d'attaque (8) de celle-ci à une même position verticale de l'aube (3) à laquelle la charge de l'aube devient maximum est définie comme étant une position relative de charge maximum,
la longueur de la corde axiale (Cx) de l'aube (3) est plus élevée au niveau d'un moyeu (10) et d'une extrémité (11) de celle-ci qu'au niveau d'une portion verticale intermédiaire d'elle-même, et une position relative à charge maximum au niveau du moyeu (10) et de l'extrémité (11) de l'aube (3) est fixée pour être plus proche d'un bord de queue (9) de celle-ci qu'une position relative à charge maximum de la portion verticale intermédiaire de l'aube (3),
**caractérisée en ce que**
une longueur de corde circonférentielle est plus petite au niveau du moyeu (10) et de l'extrémité (11) de l'aube qu'au niveau de la portion verticale intermédiaire de l'aube (3), et un angle d'étalement de l'aube (3) est plus petit au niveau du moyeu (6) et de l'extrémité (11) de l'aube (3) qu'au niveau de la portion verticale intermédiaire de celle-ci.

**2.** Aube statorique selon la revendication 1, dans laquelle :

lorsqu'un point, à l'exception du niveau d'un bord d'attaque (8) et d'un bord de queue (9) de chacune des aubes (3), auquel une pression statique sur une surface de succion de l'aube (3) devient minimum, est défini comme étant une position à pression minimum sur le côté succion,
une position à pression minimum du côté succion au niveau du moyeu (10) et de l'extrémité (11) de l'aube (3) est choisie plus proche d'un côté du bord de queue qu'une position à pression minimum du côté succion de la portion verticale intermédiaire de l'aube (3).

**3.** Aube statorique selon la revendication 1, dans laquelle :
chacune des aubes (3) est formée sous une forme concave sur un côté de succion d'un bord de queue (9) de l'aube (3), l'aube (3) étant en outre formée sous une forme convexe sur une surface côté pression du bord de queue (9) de l'aube.

**4.** Aube statorique selon la revendication 1, dans laquelle :

lorsqu'un point, à l'exception du bord d'attaque (8) et du bord de queue (9) de chacune des aubes (3), auquel une pression statique sur une surface de succion de l'aube (3) devient minimum, est défini comme étant une position à pression minimum côté succion,
une position à pression minimum côté succion au niveau du moyeu (10) et de l'extrémité (11) de l'aube (3) est choisie plus proche d'un côté du bord de queue qu'une position à pression minimum côté succion de la portion verticale intermédiaire de l'aube (3).

**5.** Aube statorique selon l'une au moins des revendications 1 et 4, dans laquelle :
chacune des aubes (3) est formée sous une forme concave sur une surface de succion d'un bord de queue (9) de l'aube (3), l'aube (3) étant en outre formée sous une forme convexe sur une surface de pression du bord de queue (9) de l'aube.

**6.** Aube statorique de turbine selon l'une quelconque des revendications 1 à 5, dans laquelle :

lorsqu'un pas entre les aubes est exprimé par "t", la longueur de la corde axiale par "Cx", un angle d'écoulement entrant, mesuré depuis une direction axiale, par "a", et un angle d'écoulement sortant, mesuré depuis la direction axiale, par "β", et une valeur Ψ donnée par

$$\Psi = 2(t/Cx)\cos^2 b\ |\tan\alpha - \tan\beta|\ \ldots\ \text{(expression 1)}$$

est définie comme étant un coefficient de charge,
le coefficient de charge au niveau de la position verticale intermédiaire de l'aube (3) adopte une valeur quelconque allant entre 0,7 et 1,1 dans l'expression 1.

**7.** Aube statorique de turbine selon la revendication 6, dans laquelle :
lorsque la longueur de corde axiale (Cx) se déplace depuis le moyeu de l'aube (10) en direction de l'extrémité (11) de l'aube, la longueur de corde axiale (Cx) du moyeu (10) de l'aube diminue à un taux équivalent ou supérieur à un taux de changement de la longueur de corde axiale (Cx) dans le voisinage de la position verticale intermédiaire de l'aube (3), et la longueur de corde axiale (Cx) de l'extrémité de l'aube augmente à une vitesse équivalente ou supérieure au taux de changement de la longueur de corde axiale (Cx) au voisinage de la position verticale intermédiaire de l'aube (3).

**8.** Équipement pour turbine à vapeur, comprenant :

un générateur de vapeur pour chauffer de l'eau et engendrer de la vapeur ;
une turbine à vapeur entraînée par la vapeur générée par le générateur de vapeur ; et
un condenseur (22) pour faire condenser la vapeur qui a entraîné la turbine à vapeur ;
dans lequel la turbine à vapeur inclut l'aube statorique de turbine (3) selon l'une quelconque des revendications 1 à 7.

# Fig.1

# Fig.2

# Fig.3

# Fig.4

# Fig.5A

# Fig.5B

# Fig.5C

# Fig.6

# Fig.7

# Fig.8

# Fig.9

# Fig.10

**EP 2 492 440 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008202420 A
- WO 2007042522 A1
- EP 1967694 A2